# EUROPEAN PATENT APPLICATION

(11) **EP 3 293 375 A1**
(43) Date of publication of application: **14.03.2018**
(21) Application number: 17190368.5
(22) Date of filing: 11.09.2017
(51) Int. Cl.: F01M 11/04

(54) **DRAIN PLUG AND MANUFACTURING METHOD THEREOF**

(30) Priority: 13.09.2016 JP 2016178744
(71) Applicant: TOYOTA JIDOSHA KABUSHIKI KAISHA, Toyota-shi, Aichi-ken, 471-8571 (JP)
(72) Inventor: MIYAZONO, Hideaki, TOYOTA-SHI, AICHI-KEN, 471-8571 (JP); MATSUMOTO, Yosuke, TOYOTA-SHI, AICHI-KEN, 471-8571 (JP); FUJINO, Jiro, TOYOTA-SHI, AICHI-KEN, 471-8571 (JP)
(74) Representative: Intès, Didier Gérard André

(57) **Abstract**

A drain plug (1) includes a main body (3) which has an entirely threaded region (3b) and a partially threaded region (3c). An outer circumferential surface of the main body (3) has an external thread (2), and at least one cutout (5). Thus, the entirely threaded region (3b) is formed on a base end side of the main body (3). The cutout (5) includes a first part (6) extending from the leading end of the main body (3) in the axial direction of the main body (3), and a second part (7) extending from the first part (6) in a direction toward the base end of the main body (3). The second part (7) has an inclined surface, and the inclined surface is connected to the entirely threaded region (3b).

## Description

### BACKGROUND OF THE INVENTION

### 1. Field of the Invention

The present invention relates to a drain plug and a manufacturing method thereof.

### 2. Description of Related Art

A drain plug is used to discharge a fluid, such as oil, contained in a casing of an engine, a transmission, etc. The drain plug has a substantially columnar main body, and a head that is formed at a rear end of this main body and used to drive the drain plug to turn. The main body of the drain plug has an external thread that is configured to be joined to an internal thread of a drain hole provided in the casing.

When the drain plug is loosened and removed from the drain hole, the fluid is discharged from the casing at a high flow rate as soon as a leading end part of the main body is separated from the drain hole. It is desirable to limit the flow rate of this fluid and thereby prevent the fluid from adhering to surrounding components. Japanese Patent Application Publication No. 2006-138437 (JP 2006-138437 A) discloses a drain plug provided with a cut surface that is located on a lateral side of the main body of the drain plug and extends in an axial direction along the entire length of the main body. In a state where the drain plug is fixed in a drain hole, this cut surface forms a clearance, leading to an internal region of the casing, between the drain hole and the main body of the drain plug.

The drain plug disclosed in Japanese Patent Application Publication No. 11-173133 (JP 11-173133 A) is provided with an oil introduction passage that extends along an axis of the main body, and an oil discharge passage that extends in a radial direction from this oil introduction passage and is open in an outer circumferential surface of the main body.

The drain plugs disclosed in Japanese Examined Utility Model Application Publication No. 54-44827 (JP 54-44827 Y) and Japanese Examined Utility Model Application Publication No. 46-2006 (JP 46-2006 Y) are provided with a liquid guide groove that is open in a side surface of the main body. This liquid guide groove extends in an axial direction in a region including a central axis of the main body.

### SUMMARY OF THE INVENTION

Being provided with the cut surface along the entire length of the main body, the drain plug of JP 2006-138437 A allows a large amount of fluid to be discharged as soon as the drain plug starts to be loosened, thus failing to sufficiently restrict the flow rate.

With the oil discharge passage opening perpendicularly to the outer circumferential surface of the main body, the drain plug of JP 11-173133 A allows a large amount of fluid to be discharged as soon as the oil discharge passage is exposed from the drain hole, thus failing to sufficiently restrict the flow rate. Moreover, an opening edge of the oil discharge passage is formed in the external thread of the main body, so that this opening edge may damage the internal thread of the drain hole during installation into the drain hole.

JP 54-44827 Y does not specify the shape of a bottom part of the liquid guide groove of the drain plug. In the drain plug of JP 46-2006 Y, a portion of a bottom part of the liquid guide groove located closest to the head extends perpendicularly to the external thread of the main body. Accordingly, this drain plug allows a large amount of fluid to be discharged as soon as the liquid guide groove is exposed from the drain hole, thus failing to sufficiently restrict the flow rate. Moreover, an opening edge of the liquid guide groove is formed in the external thread of the main body, so that this opening edge may damage the internal thread of the drain hole during installation into the drain hole.

The present invention provides a drain plug that allows precise control of the amount of fluid to be discharged when the drain plug is loosened, and a manufacturing method of this drain plug.

A first aspect of the present invention is a drain plug. The drain plug is configured to be screwed into an internal thread of a drain hole provided in a casing containing a fluid. The drain plug includes a main body having an entirely threaded region and a partially threaded region. The entirely threaded region is provided on a base end side of the main body. The entirely threaded region is a region in which ridges of an external thread are provided along the entire circumference of an outer circumferential surface of the main body. The partially threaded region is provided on a leading end side of the main body. The partially threaded region is a region including the external thread and at least one cutout such that the ridges of the external thread are present in only a part of the outer circumferential surface in a circumferential direction. The external thread is configured to be screwed into the internal thread. The at least one cutout extends from the leading end of the main body along a part of the main body in an axial direction and along a part of the main body in the circumferential direction. The distance from a central axis of the main body to the ridges of the entirely threaded region and the distance from the central axis to the ridges of the partially threaded region are equal to each other. The distance from the central axis to the cutout is shorter than the distance from the central axis to the ridges of the external thread. The cutout includes a first part and a second part. The first part extends from the leading end of the main body in a direction parallel to the axial direction of the main body. The second part extends from the first part in a direction toward the base end of the main body. The second part has an inclined surface that is inclined such that the distance from the central axis of the main body increases with the decreasing distance to the base end of the main body. The inclined surface is connected to the entirely threaded region.

With this configuration, the second part of the cutout has the inclined surface that is inclined so that the distance from the central axis of the main body increases with the decreasing distance to the base end of the main body, and this inclined surface is connected to the entirely threaded region. Thus, an opening area formed between the drain hole and the main body can be precisely controlled according to the amount of loosening of the drain plug. As a result, the amount of fluid to be discharged can be precisely controlled.

Compared with if the entire cutout constitutes a single surface that is inclined relative to the axial direction of the main body, the cutout including the first part and the second part allows a large amount of adjustment to be made to the opening area relative to the number of times the drain plug is turned to loosen. Thus, the flow rate can be quickly adjusted.

In the above drain plug, the cutout may have a shape produced by forging a columnar base material that is to constitute the main body. In this case, the cutout can be formed by forging the base material, so that the drain plug can be manufactured by a short-time process.

In the above drain plug, at least one of the first part and the second part may be flat.

In the above drain plug, the opening area of a first opening may be smaller than an opening area of a second opening when a rim of the drain hole and the second part intersect with each other. The first opening may be defined by the rim and a line of intersection between the second part and an imaginary plane defined by the rim. The second opening may be defined by the rim and an edge of the second part. In this case, the effective cross-sectional area of the fluid passage varies not only in the circumferential direction and the axial direction but also in the radial direction of the drain plug according to the amount of loosening of the drain plug. Thus, the amount of fluid to be discharged can be precisely controlled by the second part.

In the above drain plug, the cutout may be provided with a recess that has a smaller width than the cutout in a front view of the cutout. The outline of the recess except for a leading end part of the main body may be located inside the outline of the cutout. In this case, although a complicated process is required to form the recess, the opening edge of the recess is not formed in the external thread but formed at a position set back from the external thread toward the central axis of the main body. Accordingly, this opening edge of the recess does not touch the internal thread of the drain hole during installation of the drain plug into the drain hole. Thus, damage to the internal thread of the drain hole caused by the opening edge of the recess can be prevented.

In the above drain plug, the main body may have an axial hole and a radial hole. The axial hole may extend from a leading end part of the main body in the axial direction of the main body. The radial hole may be open inside the cutout and connected to the axial hole. In this case, although a complicated process is required to form the axial hole and the radial hole, the opening edge of the radial hole is not formed in the external thread but formed at a position set back from the external thread toward the central axis of the main body. Accordingly, this opening edge of the radial hole does not touch the internal thread of the drain hole during installation of the drain plug into the drain hole. Thus, damage to the internal thread of the drain hole caused by the opening edge of the radial hole can be prevented.

A second aspect of the present invention is a manufacturing method of a drain plug. The manufacturing method includes: forming, by forging, at least one cutout in a columnar main body of the drain plug such that the at least one cutout extends from a leading end of the main body along a part of the main body in an axial direction and along a part of the main body in a circumferential direction; and forming an external thread in an outer circumferential surface of the main body. The cutout is formed so as to have a first part and a second part. The first part extends from the leading end of the main body in a direction parallel to the axial direction of the main body. The second part extends from the first part in a direction toward a base end of the main body. The second part has an inclined surface that is inclined such that the distance from a central axis of the main body increases with the decreasing distance to the base end of the main body. An entirely threaded region in which ridges of the external thread are present along the entire circumference of the main body is formed on a base end side of the main body. A partially threaded region in which the ridges of the external thread are present in only a part of the main body in the circumferential direction is formed on a leading end side of the main body. The distance from the central axis of the main body to the ridges of the entirely threaded region and the distance from the central axis to the ridges of the partially threaded region are equal to each other. The distance from the central axis to the cutout is shorter than the distance from the central axis to the ridges of the external thread. The inclined surface is connected to the entirely threaded region.

According to this aspect, the same effects as in the first aspect can be achieved. Moreover, compared with forming the cutout by a cutting process, forming the cutout by forging can reduce the processing time.

In the above manufacturing method of the drain plug, the forming of the external thread may be performed by thread rolling. In this case, the drain plug is manufactured by forging and thread rolling, without involving a cutting process, so that the processing time can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side view showing a drain plug according to a first embodiment of the present invention;
FIG. 2 is a front view showing the drain plug of the first embodiment;
FIG. 3 is a rear view showing the drain plug of the first embodiment;
FIG. 4 is a sectional view showing a head of the drain plug of the first embodiment;
FIG. 5 is a flowchart showing a manufacturing method of the drain plug of the first embodiment;
FIG. 6A is a sectional view schematically showing the manufacturing method of the drain plug of the first embodiment;
FIG. 6B is a sectional view schematically showing the manufacturing method of the drain plug of the first embodiment;
FIG. 6C is a sectional view schematically showing the manufacturing method of the drain plug of the first embodiment;
FIG. 7 is a sectional view showing a state of use of the drain plug of the first embodiment, specifically a state where the drain plug is fastened;
FIG. 8 is a sectional view showing a state of use of the drain plug of the first embodiment, specifically a state where the drain plug is loosened halfway;
FIG. 9 is a perspective view of a main part showing a state where the drain plug of the first embodiment is loosened halfway;
FIG. 10 is a side view showing a drain plug according to a first modified example of the first embodiment;
FIG. 11 is a front view showing the drain plug according to the first modified example of the first embodiment;
FIG. 12 is a front view showing a drain plug according to a second modified example of the first embodiment;
FIG. 13 is a side view showing a drain plug according to a second embodiment of the present invention;
FIG. 14 is a front view showing the drain plug according to the second embodiment;
FIG. 15 is a front view showing a drain plug according to a first modified example of the second embodiment;
FIG. 16 is a front view showing a drain plug according to a second modified example of the second embodiment;
FIG. 17 is a front view showing a drain plug according to a third modified example of the second embodiment;
FIG. 18 is a side view showing a drain plug according to a third embodiment of the present invention; and
FIG. 19 is a front view showing the drain plug according to the third embodiment.

### DETAILED DESCRIPTION OF EMBODIMENTS

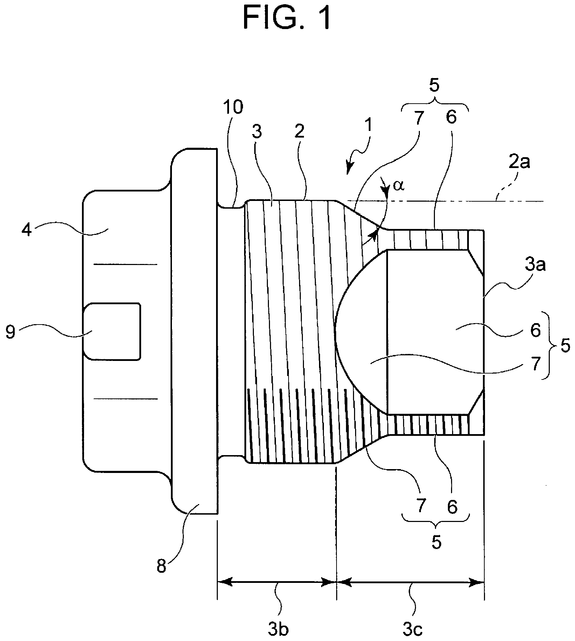

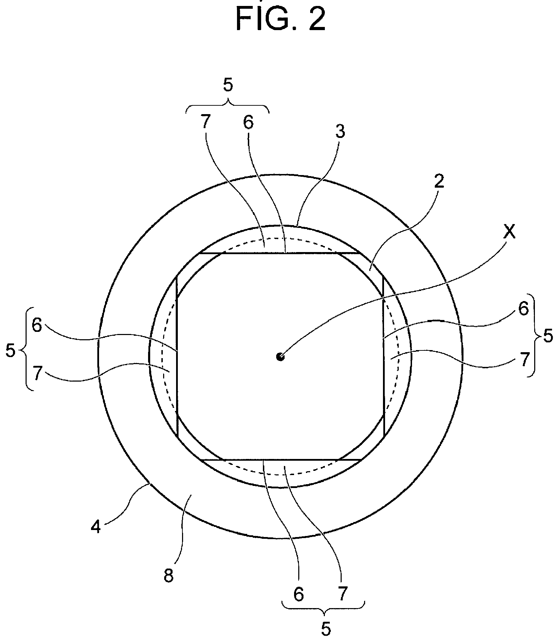

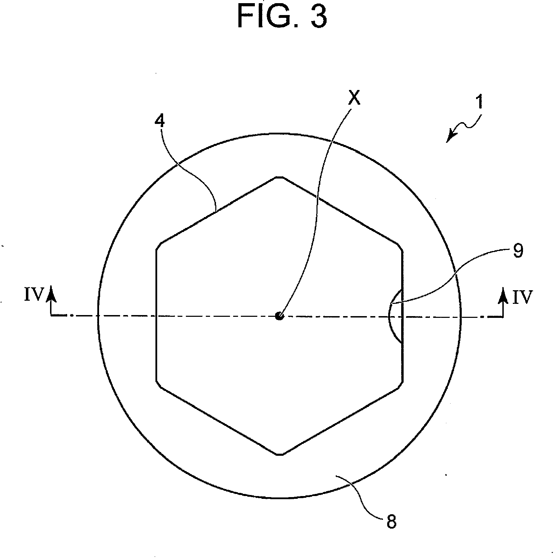

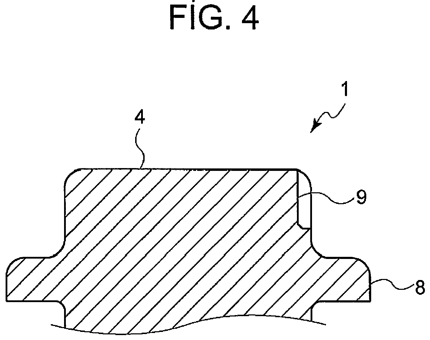

Embodiments of the present invention will be described in accordance with the drawings. In FIG. 1 to FIG. 4, a drain plug 1 according to a first embodiment of the present invention includes a substantially columnar main body 3 having an external thread 2, and a head 4 formed at a rear end of the main body 3. The outside diameter of the external thread 2 is constant along the entire length of the main body 3.

Four cutouts 5 are formed in an outer circumferential surface of the main body 3, at equal angular intervals in a circumferential direction. Each cutout 5 extends along a part of the main body 3 in a longitudinal direction including a leading end part 3a of the main body 3. The four cutouts 5 each extend along a part of the outer circumferential surface of the main body 3 in the circumferential direction, with the external thread 2 extending between the adjacent cutouts 5 in the longitudinal direction of the main body 3. Thus, on a base end side of the main body 3, ridges of the external thread 2 are present along the entire circumference of the main body 3 (this region will be hereinafter appropriately referred to as an "entirely threaded region 3b"). On a leading end side of the main body 3, the ridges of the external thread 2 are present in only a part of the main body 3 in the circumferential direction (this region will be hereinafter appropriately referred to as a "partially threaded region 3c"). The outside diameter of the external thread 2 is constant along the entire length of the main body 3 in the axial direction. Thus, the distances in a radial direction from a central axis x of the main body 3 to the entirely threaded region 3b and to the partially threaded region 3c are equal to each other. The term cutout in the present invention refers to a part where the distance in the radial direction from the central axis x of the main body 3 is smaller than the distance from the central axis x to the external thread 2, and this term does not mean that the cutout is formed by a cutting process.

All the ridges present in the partially threaded region 3c are not included in a region of 180 degrees around an axis of the main body 3. Therefore, when only the partially threaded region 3c of the drain plug 1 is screwed into and engaged with a drain hole 14 to be described later, the drain plug 1 is stably retained inside the drain hole 14 by the external thread 2 of the partially threaded region 3c.

The cutout 5 includes a first part 6 and a second part 7. The first part 6 is flat and provided in a region including a leading end part of the cutout 5. The first part 6 extends parallel to the axial direction of the main body 3. A pair of first parts 6 adjacent to each other form a right angle.

The second part 7 is provided in a region including a base end part of the cutout 5 (i.e., an end part on the side of the head 4). The second part 7 extends from the first part 6 in a direction toward the base end of the main body 3. The entire second part 7 constitutes a single inclined surface, and the second part 7 extends while being inclined relative to the axial direction of the main body 3 so that the distance in the radial direction from the central axis x of the main body 3 increases (i.e., the second part 7 shifts toward a radially outer side of the main body 3) with the decreasing distance to the base end of the cutout 5. The second part 7 is flat. The second part 7 should have this inclined surface, which is inclined so that the distance in the radial direction from the central axis x of the main body 3 increases with the decreasing distance to the base end of the cutout 5, at least in an end portion of the second part 7 on the side of the base end part of the cutout 5. The second part 7 is directly connected to the entirely threaded region 3b. As will be described later, an angle α formed by the second part 7 relative to an imaginary extension line 2a of the external thread 2 is set so that the second part 7 contributes to control of the flow rate of a fluid when the drain plug 1 is loosened.

The head 4 is formed as the head of a flanged hexagonal bolt, and has a disk-shaped flange 8 with a diameter larger than the width across corners of the hexagon. In one of six flat surfaces formed on a circumference of the head 4, a turning position mark 9 having a recessed shape is formed to indicate a turning position. The head 4 may have another structure that is adapted to drive the drain plug 1 to turn. For example, the head 4 may have a quadrangular columnar shape or a plate shape. The head 4 may have a slot, cross recess, hexagon socket, or square slot to drive the drain plug 1 to turn. An underhead fillet 10 that is a part where no ridges are formed is formed in the main body 3, at a border with the head 4.

The head 4 and the cutouts 5 have shapes that can be formed by forging a columnar base material 60 that is to constitute the main body 3. It is preferable that the cutouts 5 be formed to such a radial depth that the cutouts 5 do not include the central axis x of the main body 3. The distance in the radial direction from the central axis x to the cutout 5 is preferably larger than 50% of the radius of the external thread 2.

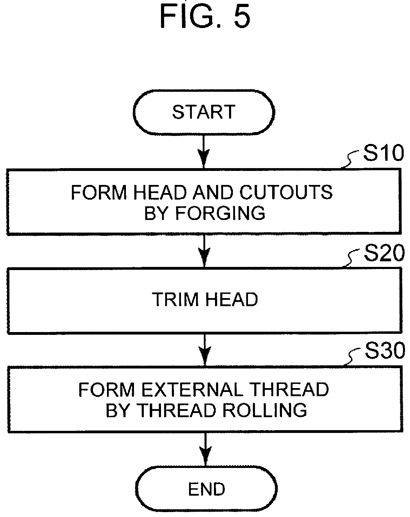

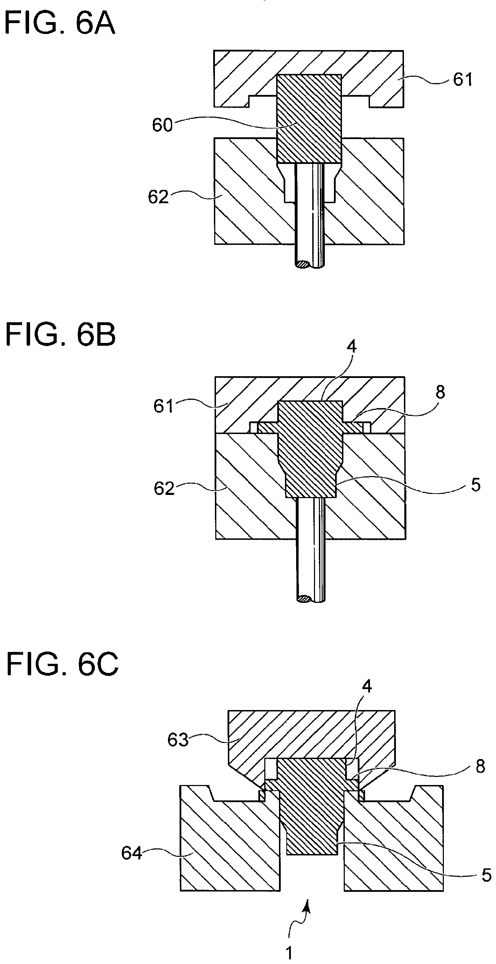

A manufacturing method of the drain plug 1 according to the first embodiment is as follows. In FIG. 5, first, the head 4 and the cutouts 5 are formed in the columnar base material 60 that is made of steel (step S10; FIG. 6A and FIG. 6B). This step is performed by cold forging. Specifically, in this step, an upper end part of the base material 60 is enlarged by a publicly known punch 61, for example, to form the hexagonal columnar head 4 having the flange 8. At the same time, the leading end part of the main body 3 is drawn by a stepped die 62 to form the cutouts 5.

Next, an outer edge of the flange 8 is cut off by a trimming punch 63 and a die 64 (step S20; FIG. 6C). Next, the external thread is formed in the outer circumferential surface of the main body 3 (step S30). This step is performed by thread rolling using thread rolling die and thread rolling machine. These steps complete the drain plug 1.

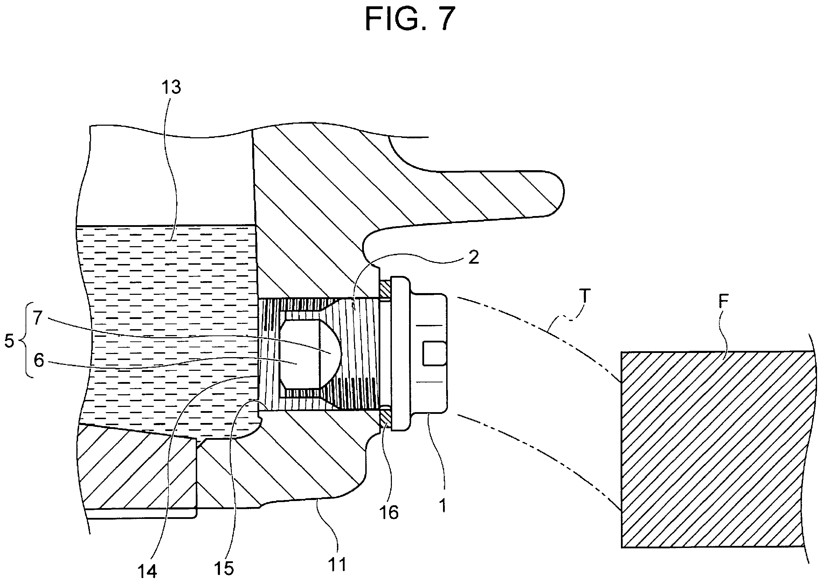

The drain plug 1 configured as has been described above is used by being joined to a transmission case 11 as shown in FIG. 7. The transmission case 11 is made of an aluminum alloy, and rotatably holds a differential gear (not shown) inside and contains lubricating oil 13 in a bottom part. The drain hole 14 is provided in the bottom part of the transmission case 11, in a side surface on a vehicle front side. Providing the drain hole 14 thus in the side surface and not in a bottom surface of the transmission case 11 is advantageous in that collision with an obstacle while the vehicle is running on a rough road can be prevented. Moreover, since an engine mount is provided on a vehicle lateral side, it is advantageous that the drain hole 14 is provided on the vehicle front side and not on the vehicle lateral side. An axis of the drain hole 14 extends horizontally. A suspension member frame F is disposed at a position facing the drain hole 14. As shown in FIG. 7, in the case where a drain plug that is not improved according to the present invention is used, removing this drain plug from the drain hole 14 causes the lubricating oil to be released parabolically along a discharge trajectory T. As a result, the lubricating oil may adhere to the suspension member frame F.

An internal thread 15 is formed in an inner circumferential surface of the drain hole 14. The external thread 2 of the drain plug 1 is screwed into the internal thread 15 of the drain hole 14. The drain plug 1 is joined to the transmission case 11, with a sealing washer 16 disposed between the drain plug 1 and the drain hole 14.

When the drain plug 1 thus joined to the transmission case 11 is loosened, as long as only a base part of the main body 3 (i.e., only the entirely threaded region 3b) of the drain plug 1 is exposed from a rim 14a of the drain hole 14, only an amount of lubricating oil corresponding to leakage through a clearance between the external thread 2 and the internal thread 15 is discharged from the drain hole 14.

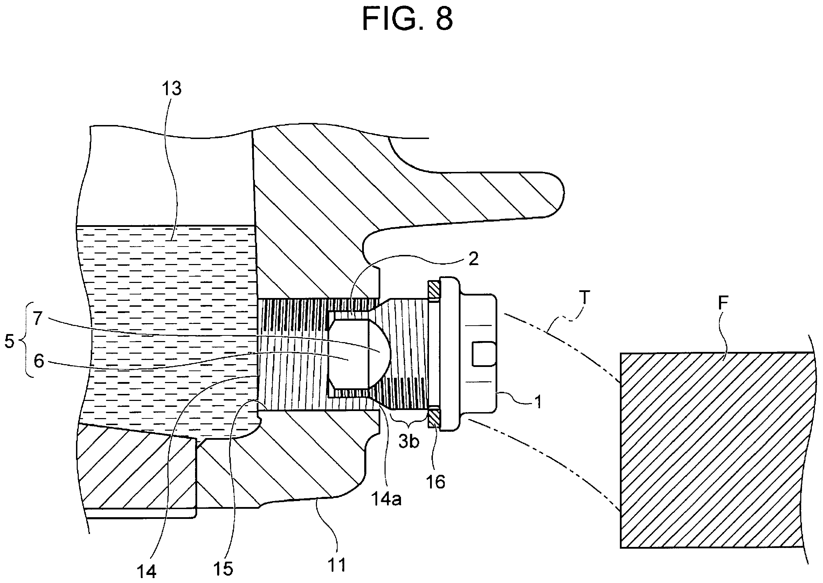

Next, as shown in FIG. 8, when the second part 7 of the cutout 5 is exposed from the rim 14a of the drain hole 14, an amount of lubricating oil according to the area of an opening formed between this second part and the drain hole 14 is discharged. Since the second part 7 is inclined relative to the axial direction of the main body 3 and the inclined surface of the second part 7 is connected to the entirely threaded region 3b, the opening area formed between the drain hole 14 and the main body 3 varies according to the amount of loosening of the drain plug 1. Thus, the amount of fluid to be discharged can be precisely controlled.

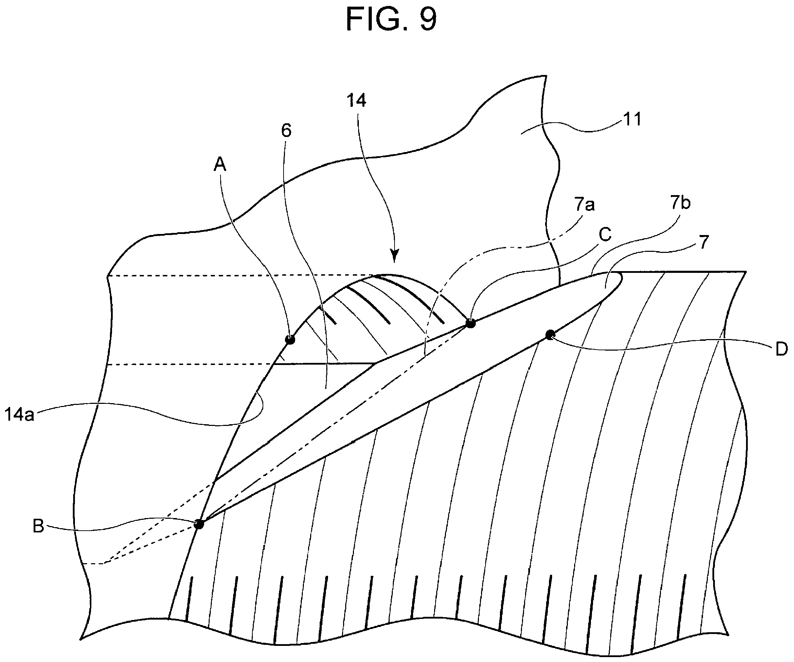

Here, the angle α formed by the second part 7 relative to the imaginary extension line 2a (see FIG. 1) of the external thread 2 is set so that the second part 7 contributes to control of the flow rate of the lubricating oil when the drain plug 1 is loosened. The angle α is preferably smaller than 45°. Specifically, as shown in FIG. 9, the opening area of a first opening ABC defined by the rim 14a of the drain hole 14 and a line of intersection 7a between the second part 7 and an imaginary plane defined by the rim 14a is set so as to remain smaller than the opening area of a second opening ABDC defined by the rim 14a and an edge 7b of the second part 7, all the while that the rim 14a of the drain hole 14 and the second part 7 intersect with each other. Accordingly, all the while that the rim 14a of the drain hole 14 and the second part 7 intersect with each other, the second part 7 contributes to control of the flow rate of the lubricating oil, so that the effective cross-sectional area of the lubricating oil passage varies not only in the circumferential direction and the axial direction but also in the radial direction of the drain plug 1 according to the amount of loosening of the drain plug 1. Thus, the amount of lubricating oil to be discharged can be precisely controlled.

When the first part 6 of the cutout 5 is exposed from the rim 14a of the drain hole 14, the effective opening area formed between the drain hole 14 and the main body 3 remains the same until the main body 3 is completely disengaged from the drain hole 14. When the main body 3 is completely disengaged from the drain hole 14, the drain hole 14 is fully opened.

As has been described in detail above, in the first embodiment, the cutout 5 has a shape that can be formed by forging the columnar base material 60 that is to constitute the main body 3. Thus, compared with forming the cutout 5 by a machining process, i.e., a cutting process, forming the cutout 5 by forging allows the drain plug 1 to be manufactured by a short-time process.

The second part 7 of the cutout 5 extends while being inclined relative to the axial direction of the main body 3 so that the distance in the radial direction from the central axis x of the main body 3 increases with the decreasing distance to the head 4, and this inclined surface is directly connected to the entirely threaded region 3b. Thus, the opening area formed between the drain hole 14 and the main body 3 can be precisely controlled according to the amount of loosening of the drain plug 1, and thereby the amount of fluid to be discharged can be precisely controlled.

Compared with if the entire cutout 5 constitutes a single surface that is inclined relative to the axial direction of the main body, the cutout 5 including the first part 6 and the second part 7 that are oriented in different directions allows a large amount of adjustment to be made to the opening area relative to the number of times the drain plug 1 is turned to loosen, so that the flow rate can be quickly adjusted. In other words, it is possible to control the amount of adjustment (i.e., adjustment sensitivity) of the opening area relative to the number of times the drain plug 1 is turned to loosen, by controlling the ratio between the axial dimensions of the first part 6 and the second part 7.

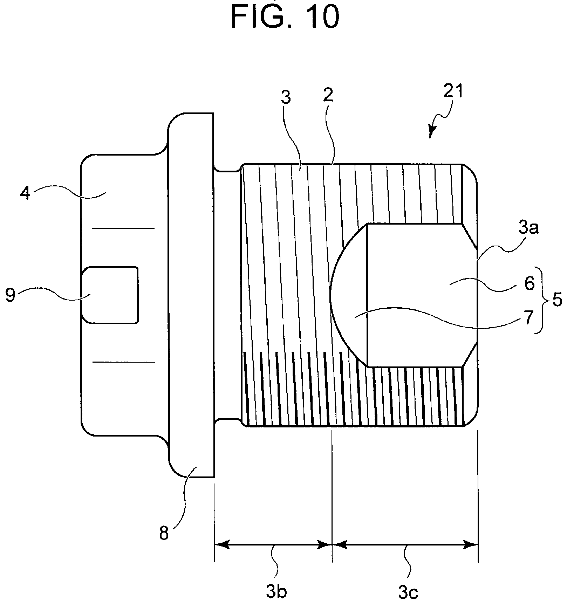

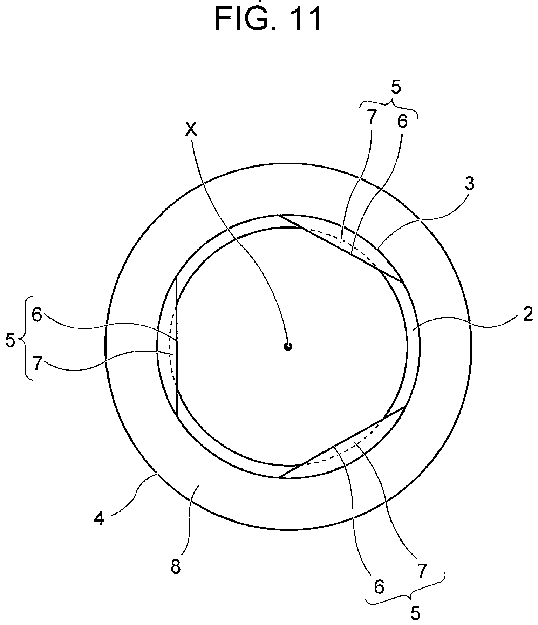

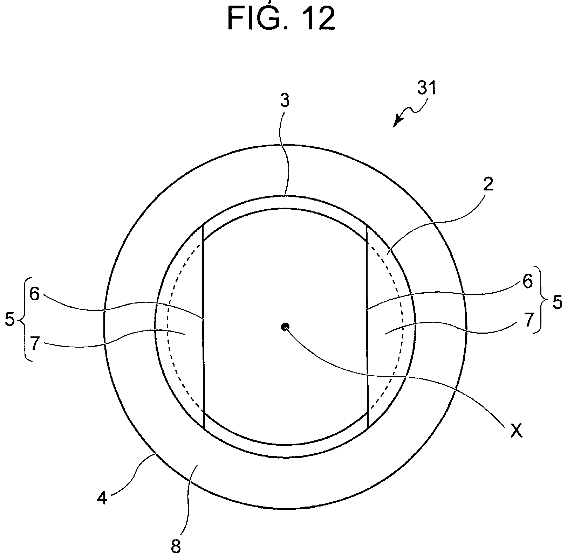

One drain plug 1 may have an arbitrary number of the cutouts 5, and thus may have one cutout 5 or a plurality of cutouts 5. For example, a drain plug 21 of a modified example shown in FIG. 10 and FIG. 11 has three cutouts 5 at equal angular intervals in the circumferential direction. A pair of first parts 6 adjacent to each other forms an angle of 120°. A drain plug 31 of another modified example shown in FIG. 12 has two cutouts 5 at equal angular intervals in the circumferential direction. The two cutouts 5 form an angle of 180°. The drain plugs 21, 31 according to these modified examples can achieve the same effects as the drain plug 1 of the first embodiment.

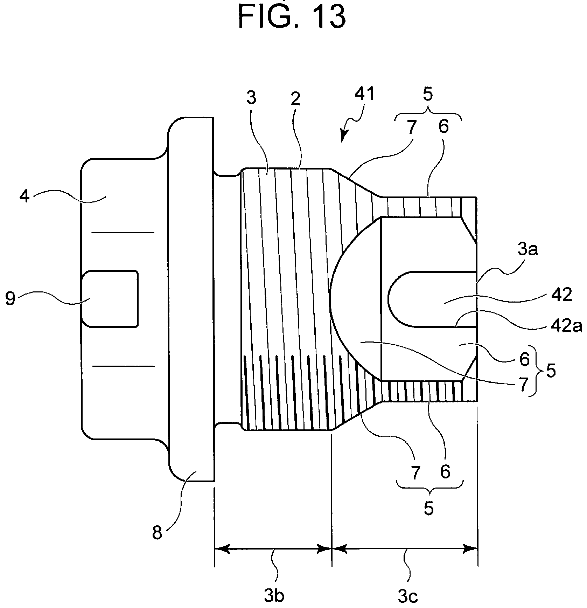

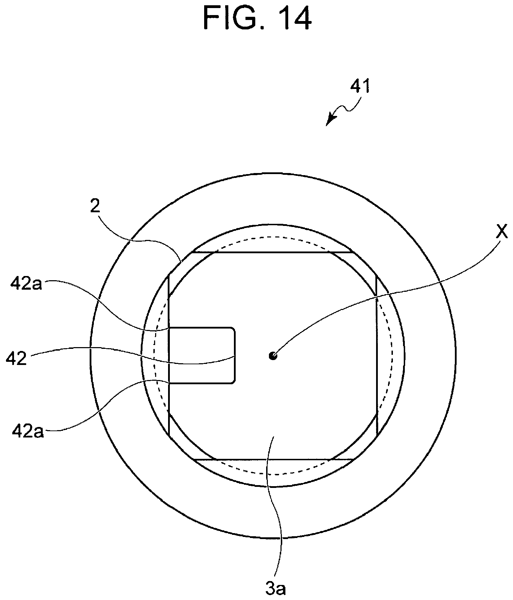

Next, a second embodiment of the present invention will be described. In FIG. 13 and FIG. 14, a drain plug 41 according to the second embodiment has a recess 42 that serves to increase the flow rate. The cutout 5 has the recess 42 that has a smaller width than the cutout 5 in a front view of the cutout 5. The recess 42 communicates with the leading end part 3a of the main body 3. The outline of the recess 42 except for the leading end part 3a of the main body 3 in the front view of the cutout 5 is located inside the outline of the cutout 5. The recess 42 is formed by a cutting process. The cutting process of the recess 42 is performed after the cutouts 5 are formed by forging, but this cutting process may instead be performed before the cutouts 5 are formed. This cutting process may be performed after thread rolling of the ridges. The recess 42 is provided in only one of the four cutouts 5, at the same position as the turning position mark 9 in the circumferential direction of the main body 3. However, the recess 42 may be provided in two or more cutouts 5 of the four cutouts 5. The other components of the second embodiment are the same as in the first embodiment, and therefore those components will be denoted by the same reference signs while a detailed description thereof will be omitted.

In the second embodiment, although a cutting process is required to form the recess 42, an opening edge 42a of the recess 42 is not formed in the external thread 2 but formed at a position set back from the external thread 2 toward the central axis x in terms of the distance from the central axis x of the main body 3. Accordingly, the opening edge 42a of the recess 42 does not touch the internal thread 15 of the drain hole 14 during installation of the drain plug 41 into the drain hole 14, so that damage to the internal thread 15 of the drain hole 14 caused by the opening edge 42a of the recess 42 can be prevented.

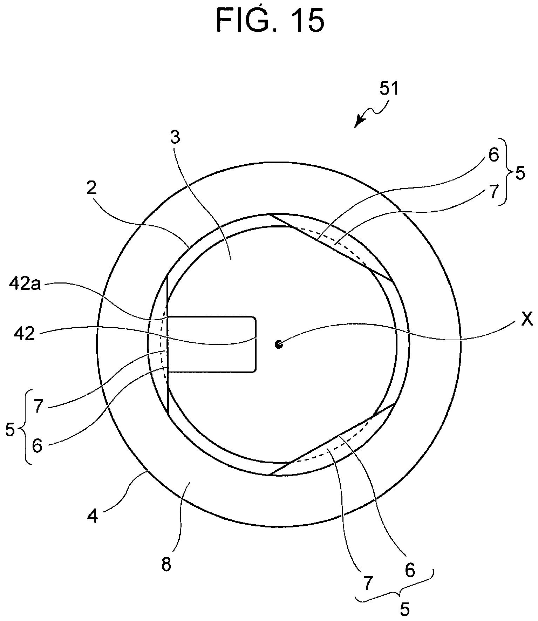

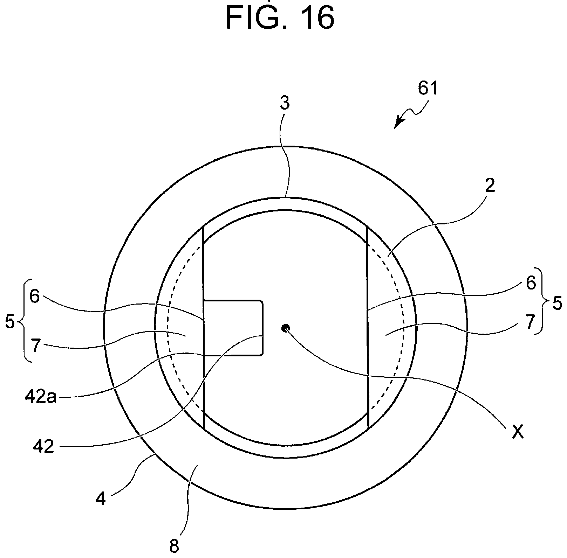

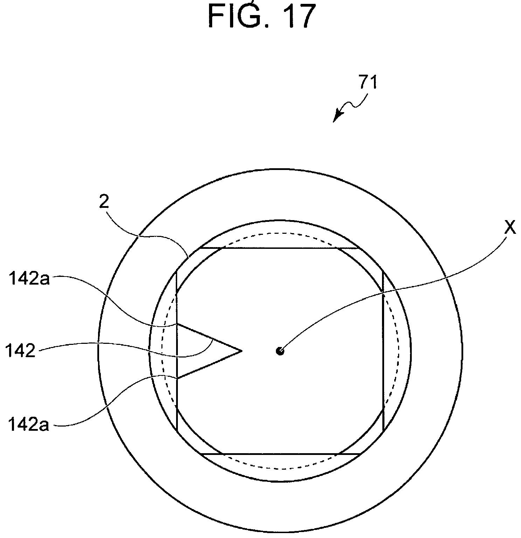

One drain plug may have an arbitrary number of the cutouts 5 that are provided with the recess 42. Thus, the recess 42 may be provided in any number of the cutouts 5 among one or a plurality of cutouts 5 provided in one drain plug 1. For example, as in the modified examples shown in FIG. 15 and FIG. 16, the recess 42 can be provided in one of the three or two cutouts 5 provided in one drain plug 51 or 61. A plurality of recesses 42 may be provided in one cutout 5. The recess may reach the second part 7 beyond the first part 6. The recess may have an arbitrary shape, and, for example, a recess 142 provided in drain plug 71 may have a wedge shape in cross section as in the modified example shown in FIG. 17.

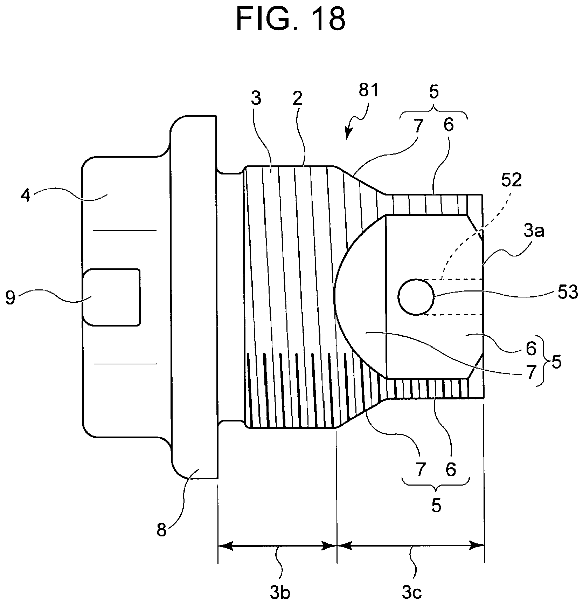

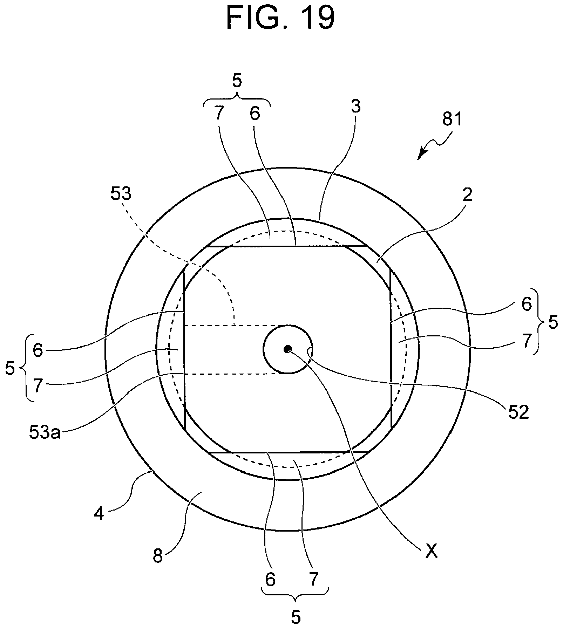

Next, a third embodiment of the present invention will be described. In FIG. 18 and FIG. 19, a drain plug 81 according to the third embodiment has an axial hole 52 and a radial hole 53 that serve to increase the flow rate. The main body 3 has the axial hole 52 that extends from the leading end part 3a of the main body 3 in the axial direction of the main body 3, and the radial hole 53 that is open inside the cutout 5 and connected to the axial hole 52. The axial hole 52 and the radial hole 53 are formed by a cutting process. The cutting process of the axial hole 52 and the radial hole 53 is performed after the cutouts 5 are formed by forging, but this cutting process may instead be performed before the cutouts 5 are formed. This cutting process may be performed after thread rolling of the ridges. The other components of the third embodiment are the same as in the first embodiment, and therefore those components will be denoted by the same reference signs while a detailed description thereof will be omitted.

In the third embodiment, although a complicated process is required to form the axial hole 52 and the radial hole 53, an opening edge 53a of the radial hole 53 is not formed in the external thread 2 but formed at a position set back from the external thread 2 toward the central axis x of the main body 3 in terms of the distance from the central axis x. Accordingly, the opening edge of the radial hole 53 does not touch the internal thread 15 of the drain hole 14 during installation of the drain plug 81 into the drain hole 14, so that damage to the internal thread 15 of the drain hole 14 caused by the opening edge of the radial hole 53 can be prevented.

One drain plug may have an arbitrary number of the cutouts 5 that are provided with the axial hole 52 and the radial hole 53. Thus, the axial hole 52 and the radial hole 53 may be provided in any number of the cutouts 5 among one or a plurality of cutouts 5 provided in one drain plug 1. Pluralities of axial holes 52 and radial holes 53 may be provided in one cutout 5. The radial hole 53 may be open in the second part 7, or may be open across the first part 6 and the second part 7. The axial hole 52 and the radial hole 53 may have arbitrary cross-sectional shapes.

The embodiments of the present invention are not limited to those embodiments and modified examples described above, and any modifications, applications, and equivalents that are encompassed by the concept of the invention specified by the scope of the claims are included in the invention. Thus, the present invention should not be narrowly interpreted, but is applicable to any other technologies belonging to the scope of the concept of the invention.

At least one of the first part and the second part that compose the cutout in the present invention may have other shapes than the shape of a flat surface, i.e., a convex shape or a concave shape. A portion of the second part may be an inclined surface. In that case, it is preferable that this inclined surface be directly connected to the entirely threaded region 3b.

The present invention is applicable to any devices that have a casing containing lubricating oil or another fluid. Examples of such devices include manual transmissions, stepless automatic transmissions, stepped automatic transmissions, and drive devices and engines of hybrid vehicles, but applications of the present invention are not limited thereto and further include, for example, radiators and water jackets of water-cooled engines.

## Claims

1. A drain plug (1; 21; 31; 41; 51; 61; 71; 81) configured to be screwed into an internal thread (15) of a drain hole (14) provided in a casing containing a fluid, the drain plug (1; 21; 31; 41; 51; 61; 71; 81) comprising
a main body (3) having an entirely threaded region (3b) and a partially threaded region (3c), wherein
the entirely threaded region (3b) is provided on a base end side of the main body (3), and the entirely threaded region (3b) is a region in which ridges of an external thread (2) are provided along an entire circumference of an outer circumferential surface of the main body (3),
the partially threaded region (3c) is provided on a leading end side of the main body (3), and the partially threaded region (3c) is a region including the external thread (2) and at least one cutout (5) such that the ridges of the external thread (2) are present in only a part of the outer circumferential surface in a circumferential direction,
the external thread (2) is configured to be screwed into the internal thread (15),
the at least one cutout (5) extends from the leading end of the main body (3) along a part of the main body (3) in an axial direction and along a part of the main body (3) in the circumferential direction,
a distance from a central axis (x) of the main body (3) to the ridges of the entirely threaded region (3b) and a distance from the central axis (x) to the ridges of the partially threaded region (3c) are equal to each other,
a distance from the central axis (x) to the cutout (5) is shorter than the distance from the central axis (x) to the ridges of the external thread (2),
the cutout (5) includes a first part (6) and a second part (7),
the first part (6) extends from the leading end of the main body (3) in a direction parallel to the axial direction of the main body (3),
the second part (7) extends from the first part (6) in a direction toward the base end of the main body (3),
the second part (7) has an inclined surface, the inclined surface is inclined such that a distance from the central axis (x) of the main body (3) increases with a decreasing distance to the base end of the main body (3), and
the inclined surface is connected to the entirely threaded region (3b).

2. The drain plug (1; 21; 31; 41; 51; 61; 71; 81) according to claim 1, wherein the cutout (5) has a shape produced by forging a columnar base material that is to constitute the main body (3).

3. The drain plug (1; 21; 31; 41; 51; 61; 71; 81) according to claim 1 or 2, wherein at least one of the first part (6) and the second part (7) is flat.

4. The drain plug (1; 21; 31; 41; 51; 61; 71; 81) according to any one of claims 1 to 3, wherein,
an opening area of a first opening (ABC) is smaller than an opening area of a second opening (ABDC) when a rim of the drain hole (14) and the second part (7) intersect with each other,
the first opening (ABC) is defined by the rim and a line of intersection between the second part (7) and an imaginary plane defined by the rim, and
the second opening (ABDC) is defined by the rim and an edge of the second part (7).

5. The drain plug (41; 51; 61; 71) according to any one of claims 1 to 4, wherein
the cutout (5) is provided with a recess (42; 142), the recess (42; 142) has a smaller width than the cutout (5) in a front view of the cutout (5), and
an outline of the recess (42; 142) except for a leading end part of the main body (3) is located inside an outline of the cutout (5).

6. The drain plug (1) according to any one of claims 1 to 4, wherein
the main body (3) has an axial hole (52) and a radial hole,
the axial hole (52) extends from a leading end part of the main body (3) in the axial direction of the main body (3), and
the radial hole is open inside the cutout (5) and connected to the axial hole (52).

7. A manufacturing method of a drain plug (1; 21; 31; 41; 51; 61; 71; 81), the manufacturing method comprising:
forming, by forging, at least one cutout (5) in a columnar main body (3) of the drain plug (1; 21; 31; 41; 51; 61; 71; 81) such that the at least one cutout (5) extends from a leading end of the main body (3) along a part of the main body (3) in an axial direction and along a part of the main body (3) in a circumferential direction,
the cutout (5) being formed so as to have a first part (6) and a second part (7),
the first part (6) extending from the leading end of the main body (3) in a direction parallel to the axial direction of the main body (3),
the second part (7) extending from the first part (6) in a direction toward a base end of the main body (3),
the second part (7) having an inclined surface, the inclined surface is inclined such that a distance from a central axis (x) of the main body (3) increases with a decreasing distance to the base end of the main body (3); and
forming an external thread (2) in an outer circumferential surface of the main body (3), wherein
an entirely threaded region (3b) in which ridges of the external thread (2) are present along an entire circumference of the main body (3) is formed on a base end side of the main body (3),
a partially threaded region (3c) in which the ridges of the external thread (2) are present in only a part of the main body (3) in the circumferential direction is formed on a leading end side of the main body (3),
a distance from the central axis (x) of the main body (3) to the ridges of the entirely threaded region (3b) and a distance from the central axis (x) to the ridges of the partially threaded region (3c) are equal to each other,
a distance from the central axis (x) to the cutout (5) is shorter than the distance from the central axis (x) to the ridges of the external thread (2), and
the inclined surface is connected to the entirely threaded region (3b).

8. The manufacturing method of the drain plug (1) according to claim 7, wherein the forming of the external thread (2) is performed by thread rolling.
